# EUROPÄISCHE PATENTANMELDUNG

(11) **EP 2 487 022 A2**
(43) Veröffentlichungstag der Anmeldung: **15.08.2012**
(21) Anmeldenummer: 12153567.8
(22) Anmeldetag: 02.02.2012
(51) Int. Cl.: B29C 45/27

(54) **Heizelement für Heißkanaldüsen und Verfahren zu dessen Herstellung**

(30) Priorität: 14.02.2011 DE 102011011205
(71) Anmelder: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE); Zimmermann, Frédéric, 35066 Frankenberg (DE)
(74) Vertreter: Buchhold, Jürgen

(57) **Zusammenfassung**

Eine elektrische Heizeinrichtung (10) für eine Heißkanaldüse hat ein rohrförmig oder hülsenartig ausgebildetes Trägerelement (20) sowie einen auf dem Trägerelement (20) aufgebrachten Schichtverbund (30), wobei der Schichtverbund (30) zumindest eine Heizleiterbahnen (43) aufweisende Heizschicht (40), eine zwischen dem Trägerelement (20) und der Heizschicht (40) angeordnete Isolierschicht (50) und eine über der Isolierschicht (50) und/oder der Heizschicht (40) aufgebrachte Abdeckschicht (60) aufweist. Die Heizschicht (40) ist bevorzugt eine eingebrannte Folie oder eine eingebrannte Dickschichtpaste, während die Isolierschicht (50) und die Abdeckschicht (60) glasartige und/oder keramische Dielektrikumschichten sind, wobei zumindest die Isolierschicht (50) und/oder die Abdeckschicht (60) nach zumindest einem Einbrennprozess gegenüber dem Trägerelement (20) unter Druckvorspannung stehen. Um ohne geometrische Veränderungen einen Temperaturfühler aufnehmen zu können, ist das Trägerelement (20) zumindest abschnittsweise mit einem Schlitz (24, 244) und/oder einer Nut (26) versehen. Der Schlitz (24, 244) wird nach dem Aufbringen und Einbrennen des Schichtverbundes (30) in das Trägerelement (20) eingebracht, wobei der Schlitz (24) und - soweit vorhanden - die Nut (26) vor den stirnseitigen Enden (21, 22) des Trägerelements (20) enden.

## Beschreibung

Die Erfindung betrifft ein Heizelement, insbesondere einen Dickschichtheizer für Heißkanaldüsen gemäß dem Oberbegriff von Anspruch 1 sowie Verfahren zu dessen Herstellung gemäß den Ansprüchen 6, 7 und 11.

Heißkanaldüsen werden in Spritzgießwerkzeugen eingesetzt, um eine Kunststoffschmelze bei einer vorgebbaren Temperatur unter hohem Druck einem trennbaren Formeinsatz zuzuführen. Sie haben meist ein Materialrohr mit einem Strömungskanal, das in einem Düsenmundstück endet. Letzteres bildet endseitig eine Düsenaustrittsöffnung, die über eine Angussöffnung im Formeinsatz (Formnest) mündet.

Damit sich die Kunststoffschmelze innerhalb des Materialrohrs nicht vorzeitig abkühlt, ist eine elektrische Heizeinrichtung vorgesehen. Diese hat meist ein wendelförmiges Heizelement, das umfangseitig auf das Materialrohr aufgesetzt wird (siehe beispielsweise DE 295 07 848 U1 oder EP 0 927 617 A1).

DE 10 2006 049 667 A1 offenbart ebenfalls eine elektrische Heizeinrichtung für eine Heißkanaldüse, auf deren Inhalt hiermit vollinhaltlich Bezug genommen wird.

Das Heizelement ist eine Heizschicht, die auf einem rohrförmig oder hülsenartig ausgebildeten Trägerelement aus Metall aufgebracht ist. Oberhalb der Heizschicht ist eine elektrisch isolierende Abdeckschicht vorgesehen, welche die Heizschicht und das Trägerelement nach außen hin abdeckt und elektrisch isoliert. Zwischen dem Trägerelement und der Heizschicht ist eine Isolierschicht angeordnet, um die Heizschicht gegenüber dem Trägerelement elektrisch zu isolieren.

Die Heizschicht wird in Form einer eingebrannten Folie oder einer eingebrannten Dickschichtpaste aufgebracht, während die Isolierschicht und die Abdeckschicht glasartige und/oder keramische Dielektrikumschichten bilden. Sämtliche Schichten bilden gemeinsam einen Schichtverbund, der auf dem Trägerelement aufgebracht ist. Sie werden nacheinander derart ausgebildet, dass diese nach dem jeweiligen Einbrennprozess gegenüber dem Trägerelement unter Druckvorspannung stehen, so dass bei der Innendruckbelastung des Trägerelementes radienabhängig in unterschiedlicher Höhe auftretende Delaminationskräfte innerhalb der Schichten kompensiert werden.

Derartige zylindrische Dickschichtheizer weisen sehr geringe Dickenabmessungen auf, was insbesondere dann von Vorteil ist, wenn die Heizeinrichtung das zu beheizende Objekt, z.B. das Materialrohr einer Heißkanaldüse, nur geringfügig im Durchmesser vergrößern soll.

Zum Einstellen oder Überwachen der Temperatur des Heizelements verwendet man gewöhnlich einen Temperaturfühler, wie z.B. ein Thermoelement, dessen Messpunkt an der thermisch kritischsten Stelle der Heißkanaldüse angebracht wird. Diese Stelle liegt meist in der Nähe oder im Bereich der Düsenspitze. Die elektrischen Anschlüsse für den Temperaturfühler liegen jedoch meist am gegenüber liegenden Ende der Düse, so dass sich der Temperaturfühler über nahezu die gesamte Länge des Materialrohres erstreckt.

Will man den Temperaturfühler in einer Bohrung oder einer Nut im Materialrohr verlegen, so führt dies zu einer Vergrößerung der Wandstärke des Materialrohres und damit zu einer Vergrößerung der Abmessungen der Heißkanaldüse, denn das Materialrohr muss derart stabil ausgeführt sein, dass es dem hohen Spritzdruck der Spritzgießvorrichtung dauerhaft standhält. Eine Bohrung oder Nut schwächt jedoch das Materialrohr.

Eine Verlegung des Temperaturfühlers innerhalb der Heizvorrichtung ist ebenfalls problematisch, weil sich entweder deren Abmessungen vergrößern oder weil das mit einer Nut oder einem Schlitz versehene Trägerelement nach dem Einbrennen der ersten Schicht aufgrund der darin erzeugten Druckspannung nach innen einfallen würde. Ein weiterer Druckvorgang wäre unmöglich. Bei einem Dickschichtheizer sind jedoch mehrere Druck- und Einbrennvorgänge notwendig, um die Isolierschichten, die Heizschichten, ggf. notwendige Kontakt- oder Zwischenschichten und die Abdeckschichten zu erzeugen.

Ziel der Erfindung ist es, ein Heizelement für eine Heißkanaldüse bereit zu stellen, das die Nachteile des Standes der Technik überwindet und bei minimalen Abmessungen einen herkömmlichen Temperaturfühler aufnehmen kann. Es soll ferner einfach und kostengünstig herstellbar sein.

Hauptmerkmale der Erfindung sind im kennzeichnenden Teil der Ansprüche 1, 6, 7 und 11 angegeben. Ausgestaltungen sind Gegenstand der Ansprüche 2 bis 5 und 8 bis 10.

Bei einer elektrische Heizeinrichtung für eine Heißkanaldüse, mit einem rohrförmig oder hülsenartig ausgebildeten Trägerelement und mit einem auf dem Trägerelement aufgebrachten Schichtverbund, wobei der Schichtverbund zumindest folgende Schichten aufweist:
■ wenigstens eine Heizleiterbahnen aufweisende Heizschicht, wobei die Heizschicht eine eingebrannte Folie oder eine eingebrannte Dickschichtpaste ist,
■ eine zwischen dem Trägerelement und der Heizschicht angeordnete Isolierschicht,
■ eine über der Isolierschicht und/oder der Heizschicht aufgebrachte Abdeckschicht,
■ wobei die Isolierschicht und die Abdeckschicht glasartige und/oder keramische Dielektrikumschichten sind und wobei zumindest die Isolierschicht und/oder die Abdeckschicht nach zumindest einem Einbrennprozess gegenüber dem Trägerelement unter Druckvorspannung steht;
sieht die Erfindung vor, dass das Trägerelement zumindest abschnittsweise mit einem Schlitz und/oder einer Nut versehen ist, wobei der Schlitz und die Nut vor den stirnseitigen Enden des Trägerelements enden.

Dadurch ist es möglich, einen Temperaturfühler der Heißkanaldüse innerhalb des Heizelements zu führen, ohne dass sich die Abmessungen der Heizeinrichtung und damit der Außendurchmesser der Heißkanaldüse nachteilig verändern. Das Materialrohr kann vielmehr derart dünn ausgelegt werden, dass es den maximal zur Verfügung stehenden Bauraum optimal ausnutzt und gleichzeitig dem innerhalb der Spritzgießvorrichtung herrschenden Spritzdruck dauerhaft standhält. Der Temperaturfühler Fühler kann innerhalb der Heizeinrichtung von der Düsenspitze zum Düsenkopf geführt werden, wobei der Innendurchmesser der Bohrung in welchem die Heißkanaldüse platziert wird nicht verändert werden muss.

Da der Schlitz bzw. die Nut für die Aufnahme des Temperaturfühlers vor den stirnseitigen Enden des Trägerelements enden, wird das Trägerelement in den Randbereichen nicht verformt. Es kann problemlos auf das Materialrohr der Heißkanaldüse aufgesetzt werden.

Die Erfindung sieht weiter vor, dass der Schlitz und/oder die Nut parallel zur Längsachse des Trägerelements verlaufen. Dies wirkt sich günstig auf die Stabilität und die Handhabung des Heizelements aus, welches rasch und bequem auf das Materialrohr einer Heißkanaldüse aufgesetzt werden kann. Dabei kann es zweckmäßig sein, zusätzlich ein Werkzeug, z.B. eine Zange, zu verwenden, um den leicht einfallenden mittleren Bereich des Schlitzes beim Aufschieben leicht aufzuweiten. Nach dem Aufbringen hat der Heizer mit Schlitz aufgrund der Klemmwirkung im mittleren Bereich einen festen Sitz und ist ohne Werkzeug nicht mehr verschiebbar.

Von Vorteil ist ferner, wenn der Schlitz und/oder die Nut quer zur Längsachse des Trägerelements zumindest abschnittsweise unterschiedliche Breiten aufweist. Ein solcher breiterer Abschnitt des Schlitzes oder der Nut dient vorzugsweise der Aufnahme des Messabschnitts bzw. des Messpunktes des Temperaturfühlers, während dessen meist schmalere Zuleitung in den schmaleren Abschnitten des Schlitzes oder der Nut verlegt sind. Dadurch kann die Breite des Schlitzes oder der Nut auf ein Minimum reduziert werden. Die Verwendung einer Nut erhöht ferner die Stabilität des Trägerelements.

Kombiniert man einen Schlitz mit einer Nut, so ist der Schlitz quer zur Längsachse des Trägerelements zumindest abschnittsweise breiter ausgebildet ist als die Nut, weil in diesem Fall der Schlitz den Messpunkt und die Nut die Zuleitung des Temperaturfühlers aufnimmt. Die Nut ist hierbei zweckmäßig radial nach außen hin offen ausgebildet.

Bei einem Verfahren zur Herstellung einer elektrischen Heizeinrichtung für eine Heißkanaldüse, mit einem rohrförmig oder hülsenartig ausgebildeten Trägerelement und mit einem auf dem Trägerelement aufgebrachten Schichtverbund, wobei der Schichtverbund zumindest folgende Schichten aufweist:
■ wenigstens eine Heizleiterbahnen aufweisende Heizschicht, wobei die Heizschicht eine eingebrannte Folie oder eine eingebrannte Dickschichtpaste ist,
■ eine zwischen dem Trägerelement und der Heizschicht angeordnete Isolierschicht,
■ eine über der Isolierschicht und/oder der Heizschicht aufgebrachte Abdeckschicht,
■ wobei die Isolierschicht und die Abdeckschicht glasartige und/oder keramische Dielektrikumschichten sind und wobei zumindest die Isolierschicht und/oder die Abdeckschicht nach zumindest einem Einbrennprozess gegenüber dem Trägerelement unter Druckvorspannung steht;
sieht die Erfindung ferner vor, dass das Trägerelement nach dem Aufbringen und Einbrennen der Heizschicht, der Isolierschicht und der Abdeckschicht zumindest abschnittsweise mit einem Schlitz und/oder einer Nut (versehen wird, wobei der Schlitz und die Nut vor den stirnseitigen Enden des Trägerelements enden.

Das Trägerelement wird damit zunächst vollständig mit dem Schichtverbund versehen und erst wenn dieser vollständig fertig gestellt ist, wird das Trägerelement mit dem für die Aufnahme des Temperaturfühlers notwendigen Schlitz und/oder der Nut versehen. Da die aufgebrachten Schichten aufgrund des höheren Ausdehnungskoeffizienten das Trägerelement unter Druckspannung versetzen, behält das Trägerelement nach jedem Einbrennen einer Schicht seine Form und Stabilität. Es kann mithin nicht nach innen einfallen. Ist der Schichtverbund fertig gestellt, wird der Schlitz oder die Nut in das Trägerelement eingebracht, so dass ein Temperaturfühler für die Heißkanalüdse in dem Schlitz und/oder der Nut versenkt oder eingelassen werden kann. Die Außenabmessungen sowohl des Materialrohres als auch des Heizelements werden nicht verändert. Die Heißkanaldüse behält ihre durch die Ausbildung der Dickschichtheizung erlangten kompakten Abmessungen und kann mit minimalen Nestabständen innerhalb eines Spritzgießwerkzeugs angeordnet werden.

Bei einem Verfahren zur Herstellung einer elektrischen Heizeinrichtung für eine Heißkanaldüse, mit einem rohrförmig oder hülsenartig ausgebildeten Trägerelement und mit einem auf dem Trägerelement aufgebrachten Schichtverbund, wobei der Schichtverbund zumindest folgende Schichten aufweist:
■ wenigstens eine Heizleiterbahnen aufweisende Heizschicht, wobei die Heizschicht eine eingebrannte Folie oder eine eingebrannte Dickschichtpaste ist,
■ eine zwischen dem Trägerelement und der Heizschicht angeordnete Isolierschicht,
■ eine über der Isolierschicht und/oder der Heizschicht aufgebrachte Abdeckschicht,
■ wobei die Isolierschicht und die Abdeckschicht glasartige und/oder keramische Dielektrikumschichten sind und wobei zumindest die Isolierschicht und/oder die Abdeckschicht nach zumindest einem Einbrennprozess gegenüber dem Trägerelement unter Druckvorspannung steht; sieht die Erfindung weiter vor, dass das Trägerelement vor dem Aufbringen und Einbrennen der Heizschicht, der Isolierschicht und der Abdeckschicht mit Schlitzen versehen wird, die durch Stege voneinander getrennt sind und das die Schlitze nach dem Aufbringen und Einbrennen der Heizschicht, der Isolierschicht und der Abdeckschicht durch Entfernen der Stege zu einem durchgehenden Schlitz miteinander verbunden werden.

Durch diese Verfahrensweise wird das Einbringen des durchgehenden Schlitzes zur Aufnahme des Temperaturfühlers wesentlich vereinfacht, weil nach dem Aufbringen des Schichtverbundes nur noch die Stege zwischen den Schlitzen entfernt werden müssen. Gleichzeitig sorgen jedoch die zwischen den Schlitzen verbleibenden Stege während des Aufbringen und Einbrennens der einzelnen Schichten des Schichtverbundes für eine hohe Formstabilität des Trägerelements. Sämtliche Schichten lassen sich präzise aufbringen und einbrennen. Erst wenn das Trägerelement vollständig mit dem Schichtverbund versehen ist, wird das Trägerelement mit dem für die Aufnahme des Temperaturfühlers notwendigen Schlitz und/oder Nut versehen.

Mit Vorteil endet der durchgehende Schlitz auch in dieser Ausführungsform vor den stirnseitigen Enden des Trägerelements, so dass diese in den Randbereich seine Formstabilität behält.

Verfahrenstechnisch ist es weiter günstig, wenn die Schlitze und die Stege fluchtend auf einer Linie liegen, wobei diese bevorzugt parallel zur Längsachse des Trägerelements verläuft.

Bei einem Verfahren zur Herstellung einer elektrischen Heizeinrichtung für eine Heißkanaldüse, mit einem rohrförmig oder hülsenartig ausgebildeten Trägerelement und mit einem auf dem Trägerelement aufgebrachten Schichtverbund, wobei der Schichtverbund zumindest folgende Schichten aufweist:
■ wenigstens eine Heizleiterbahnen aufweisende Heizschicht, wobei die Heizschicht eine eingebrannte Folie oder eine eingebrannte Dickschichtpaste ist,
■ eine zwischen dem Trägerelement und der Heizschicht angeordnete Isolierschicht,
■ eine über der Isolierschicht und/oder der Heizschicht aufgebrachte Abdeckschicht,
■ wobei die Isolierschicht und die Abdeckschicht glasartige und/oder keramische Dielektrikumschichten sind und wobei zumindest die Isolierschicht und/oder die Abdeckschicht nach zumindest einem Einbrennprozess gegenüber dem Trägerelement unter Druckvorspannung steht;
sieht die Erfindung weiter vor, dass das Trägerelement vor dem Aufbringen und Einbrennen der Heizschicht, der Isolierschicht und der Abdeckschicht mit einer Nut (und einem Schlitz versehen wird, wobei der Schlitz und die Nut vor den stirnseitigen Enden des Trägerelements enden, und wobei nach dem Aufbringen und Einbrennen der Heizschicht, der Isolierschicht und der Abdeckschicht keine mechanischen Arbeiten mehr an der elektrischen Heizeinrichtung durchgeführt werden.

Die elektrische Heizeinrichtung ist damit nach dem Aufbringen und Einbrennen der Schichten bereits fertig und muss nicht weiter nachbearbeitet werden, was eine äußerst rationelle und kostengünstige Fertigung ermöglicht. Ferner können keine Schäden oder sonstigen Beeinträchtigungen der einzelnen Funktionsschichten entstehen.

Die Ausgestaltung des erfindungsgemäßen Verfahrens sieht beispielweise vor, dass das Trägerelement vor dem Aufbringen und Einbrennen der Heizschicht, der Isolierschicht und der Abdeckschicht mit einer Nut zur Aufnahme eines Temperaturfühlers versehen wird, wobei nur wenige 1/10 mm Wandstärke in der Umfangswand des Trägerelements verbleiben und die Nut vor den stirnseitigen Enden des Trägerelements endet. Ein zusätzlicher, sich unmittelbar an die Nut anschließender kurzer Schlitzt hingegen nimmt den Kopf des Temperaturfühlers auf.

Die verbleibende Wandstärke des Trägerelements im Bereich der Nut und die unbearbeiteten stirnseitigen Enden des Trägerelements sorgen während des Aufbringen und Einbrennens der einzelnen Schichten des Schichtverbundes für eine hohe Formstabilität des Trägerelements. Sämtliche Schichten lassen sich präzise aufbringen und einbrennen. Durch diese Verfahrensweise müssen nach dem Aufbringen des Schichtverbundes keine mechanische Arbeit mehr an dem Heizer durchgeführt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Teil-Schnittansicht einer Heizvorrichtung;
- Fig. 2: eine Seiten- und Schnittansicht eines Trägerelements;
- Fig. 3: eine Seiten- und Schnittansicht eines anderen Ausführungsbeispiels eines Trägerelements; und

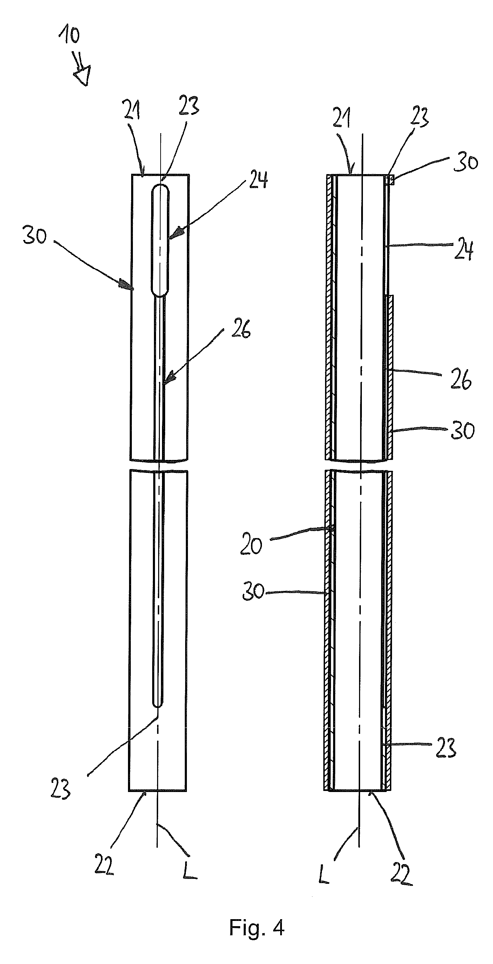

- Fig. 4: eine Seiten- und Schnittansicht eines weiteren Ausführungsbeispiels eines Trägerelements.

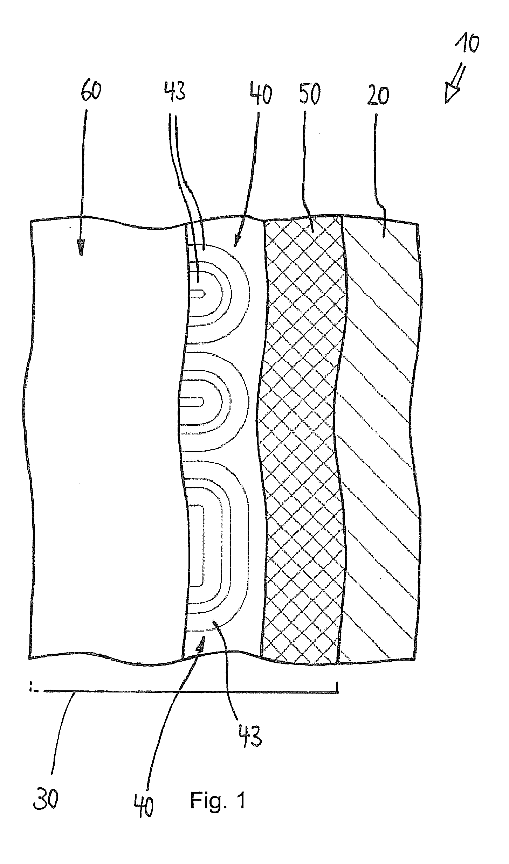

Die in Fig. 1 allgemein mit 10 bezeichnete Heizeinrichtung dient als Heizung für eine Heißkanaldüse. Sie hat ein hülsenartiges Trägerelement 20 aus Metall, das auf ein Materialrohr der Heißkanaldüse aufgeschoben wird, und einen auf dem Trägerelement 20 aufgebrachten Schichtverbund 30, der die notwenige Wärme für die Heißkanaldüse erzeugt.

Der Schichtverbund 30 weist zunächst eine auf dem Trägerelement 20 aufgebrachte Isolierschicht 50 auf. Diese trägt eine Heizschicht 40, die - wie in Fig. 1 schematisch angedeutet - mäanderförmige Heizleiterbahnen 43 aufweist. Über der Heizschicht 40 und der Isolierschicht 50 liegt eine Abdeckschicht 60, welche die Heizleiterbahnen 43 und das darunter liegende Trägerelement 20 nach außen hin abdeckt und elektrisch isoliert. Die beliebig gestaltbaren Heizleiterbahnen 43 können je nach erforderlicher Leistung in unterschiedlicher Dichte und Anordnung auf das Trägerelement 20 bzw. auf der Isolierschicht 50 aufgebracht sein. Hierdurch lässt sich bei Bedarf eine definierte Temperaturverteilung innerhalb des Materialrohrs der Heißkanaldüse erzielen.

Jede Schicht 40, 50, 60 des Schichtverbundes 30 wird mittels Direktbeschichtung stoffschlüssig aufgetragen und anschließend unter den jeweils materialspezifisch vorgegebenen Einbrennbedingungen eingebrannt, so dass ein stoffschlüssiger Verbund entsteht, der zusammen mit dem Trägerelement 20 die Heizeinrichtung 10 bildet.

Als Beschichtungsverfahren zum Auftragen der einzelnen Funktionsschichten 40, 50, 60 eignet sich die Folien- und die Dickschicht-Siebdrucktechnik, für das Auftragen der Isolierschicht 50 und/oder der Abdeckschicht 60 ggf. auch die Detonationsbeschichtung oder thermische Beschichtungsmethoden. Bevorzugt verwendet man allerdings die Dickschicht-Siebdrucktechnik unter Anwendung der Runddrucktechnologie. Das Einbrennen der Schichten 40, 50, 60 kann einzeln oder gemeinsam erfolgen.

Die (nicht dargestellten) elektrischen Anschlüsse für die Heizleiterbahnen werden ebenfalls bevorzugt in Dickschichttechnik ausgeführt, wobei die hierfür erforderlichen Kontakte derart gestaltet sind, dass die Leistungszufuhr bzw. Informationsübertragung über Kabelverbindungen erfolgen kann. Zwischen dem Trägerelement 20 und/oder den einzelnen Schichten 40, 50, 60 können noch eine oder mehrere (gleichfalls nicht gezeigte) Ausgleichsschichten angeordnet sein, die ebenfalls in Dickschichttechnik aufgebracht werden.

Um sowohl den Anstieg als auch den Verlauf der Temperatur innerhalb des Materialrohrs der Heißkanaldüse verfolgen bzw. kontrollieren und regeln zu können, ist ein (nicht dargestellter) Temperaturfühler vorgesehen. Dieser wird in dem Trägerelement 20 der Heizeinrichtung 20 versenkt, das hierzu mit einem länglichen Schlitz 24 versehen ist.

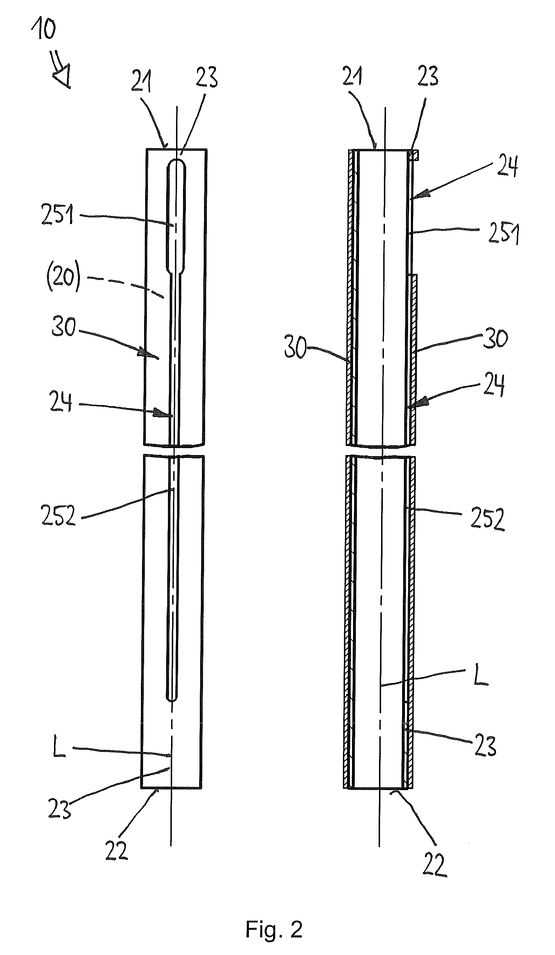

Wie Fig. 2 näher zeigt, verläuft der Schlitz im Wesentlichen parallel zur Längsachse L des Trägerelements 20. Er endet jeweils vor den stirnseitigen Enden 21, 22 des Trägerelements 20, so dass dieses nicht durchgehend geschlitzt ist und vollständig in sich einfallen kann. Die an den Enden 21, 22 verbleibenden Hülsen- oder Rohrabschnitte 23 sorgen vielmehr für eine hohe Formstabilität des Trägerelements 20, das sich lediglich im mittleren Bereich des Schlitzes ein wenig nach innen neigt. Der Temperaturfühler hingegen kann in dem Schlitz 24 versenkt werden, ohne dass sich die Dicke des Materialrohrs oder die Dicke des Heizelements 10 verändert. Ein verbreiterter Abschnitt 251 des Schlitzes 24 nimmt bevorzugt die meist etwas größere freie Messspitze des Temperaturfühlers auf, während die meist schmalere Zuleitung des Temperaturfühlers in einem schmalen Abschnitt 252 des Schlitzes 24 geführt ist.

Weil der Temperaturfühler innerhalb der Heizeinrichtung 10 verläuft, kann das Materialrohr gerade so dünn so ausgelegt werden, dass es dem erforderlichen Spritzdruck dauerhaft standhält. Der minimale Innendurchmesser der Bohrung in welchem die Heißkanaldüse im Werkzeug platziert wird, kann ebenfalls minimal ausgestaltet werden.

Bei der Herstellung der Heizeinrichtung 10 wird das Trägerelement 20 nach dem vollständigen Aufbringen des Schichtverbundes 30 geschlitzt, d.h. mit dem Schlitz 24 versehen. Dabei wird an bzw. nahe den beiden Enden des Trägerelements 20 21, 22 je ein Steg 23 gelassen um zu vermeiden, dass die Heizeinrichtung 10 aufgrund des unter Druckvorspannung stehenden Schichtverbundes 30 komplett einfällt und sich zusammenrollt. Das leichte Einfallen in der Mitte der Heizeinrichtung 10 wird dazu genutzt, das Trägerelement 20 auf das Materialrohr der Heißkanaldüse zu klemmen, so dass die Heizeinrichtung 10 im Betrieb nicht mehr verrutschen kann.

Um die Heizeinrichtung 10 auf das Materialrohr aufzubringen wird beispielsweise eine Zange benutzt, die den Schlitz 24 in der Mitte leicht auseinanderdrückt, um so den Innendurchmesser zu verbreitern und die Heizeinrichtung 10 auf das Materialrohr aufzuschieben.

Um das Einbringen des Schlitzes 24 zu erleichtern, kann vor dem Aufbringen des Schichtverbundes 30 in das Trägerelement 10 der Heizeinrichtung 10 eine Reihe von Schlitzen 240 eingebracht werden, die durch Stege 242 voneinander getrennt sind. Die Schlitze 240 und die Stege 242 liegen fluchtend auf einer Linie und bilden mithin eine Langlochreihe, die insgesamt parallel zur Längsachse L des Trägerelements 20 verläuft.

Nach dem Aufbringen des Schichtverbundes 30 auf das Trägerelement 20 müssen nun nur noch die Stege 242 entfernt werden, um einen durchgehenden Schlitz 244 zu erhalten.

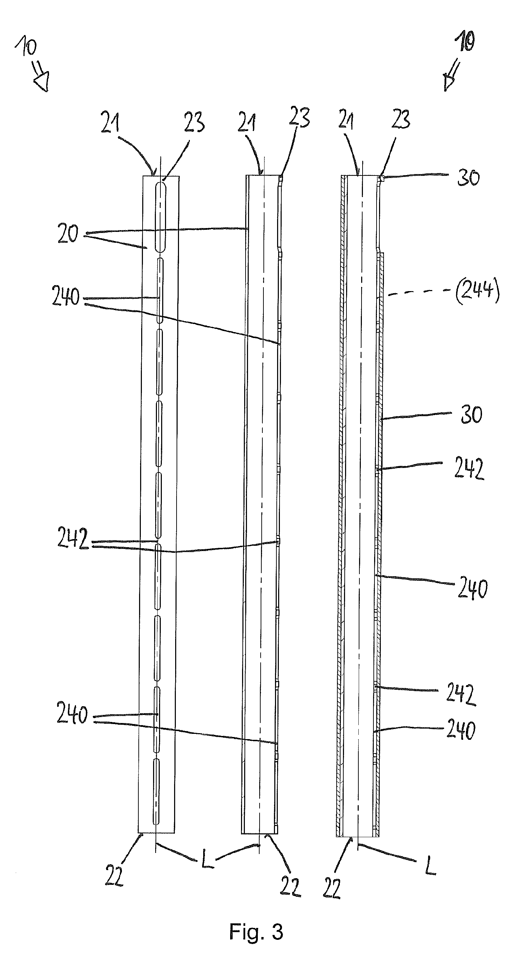

Fig. 3 zeigt links das Trägerelement 20 mit den eingebrachten Schlitzen 240, die von den Stegen 242 getrennt werden. Auch hier sind im Bereich der stirnseitigen Enden 21, 22 des Trägerelements 20 Hülsen- oder Rohrabschnitte 23 ausgebildet, die nach vollständiger Ausbildung des durchgehenden Schlitzes 244 für eine ausreichende Formstabilität des Trägerelements 20 sorgen. Fig. 3 zeigt mittig einen Querschnitt des links dargestellten Trägerelements 20.

In der Darstellung rechts in Fig. 3 ist auf das Trägerelement 20 der Schichtverbund 30 vollständig aufgebracht worden. Anschließend wurden die Stege 242 entfernt, so dass ein durchgehender Schlitz 244 für die Aufnahme des Temperaturfühlers vorhanden ist.

Anstatt eines Schlitzes 24, 244 kann vor dem Bedrucken des Trägerelements 20 eine Nut 26 eingebracht wird, an deren Stelle die Wandung nicht durchbrochen, sondern nur stark reduziert ist. Die Restwandstärke des Trägerelements kann in diesem Bereich z.B. 0,1 bis 0,2 mm betragen. Der Temperaturfühler kann nun in der Nut 26 versenkt werden. Dadurch vermeidet man die Nachbearbeitung an der bedruckten Heizeinrichtung 10. Auch hier sollte die Nut 26 nicht über die gesamte Länge des Trägerelements 20 verlaufen, sondern vor den beiden Enden 21, 22 stoppen, so dass die Enden des Trägerelements 20 durch die Endabschnitte 23 stabiler bleiben.

Der Fühler kann somit von seiner Messposition, die bevorzugt auch bei dieser Ausführungsform in einem Schlitz 24 liegt, an der Spitze der Düse bis zum Düsengehäuse in der Nut 26 geführt werden, womit der Schaftdurchmesser um 1,5 bis 2 mm reduziert werden kann.

Die Erfindung ist nicht auf eine der vorbeschriebenen Ausführungsformen beschränkt, sondern in vielfältiger Weise abwandelbar. Man erkennt jedoch, dass eine elektrische Heizeinrichtung 10 für eine Heißkanaldüse ein rohrförmig oder hülsenartig ausgebildetes Trägerelement 20 sowie einen auf dem Trägerelement 20 aufgebrachten Schichtverbund 30 hat, wobei der Schichtverbund 30 zumindest eine Heizleiterbahnen 43 aufweisende Heizschicht 40, eine zwischen dem Trägerelement 20 und der Heizschicht 40 angeordnete Isolierschicht 50 und eine über der Isolierschicht 50 und/oder der Heizschicht 40 aufgebrachte Abdeckschicht 60 aufweist. Die Heizschicht 40 ist bevorzugt eine eingebrannte Folie oder eine eingebrannte Dickschichtpaste, während die Isolierschicht 50 und die Abdeckschicht 60 glasartige und/oder keramische Dielektrikumschichten sind, wobei zumindest die Isolierschicht 50 und/oder die Abdeckschicht 60 nach zumindest einem Einbrennprozess gegenüber dem Trägerelement 20 unter Druckvorspannung stehen. Um ohne geometrische Veränderungen einen Temperaturfühler aufnehmen zu können, ist das Trägerelement 20 zumindest abschnittsweise mit einem Schlitz 24 und/oder einer Nut 26 versehen. Der Schlitz 24 wird nach dem Aufbringen und Einbrennen des Schichtverbundes 30 in das Trägerelement 20 eingebracht, wobei der Schlitz 24 und - soweit vorhanden - die Nut 26 vor den stirnseitigen Enden 21, 22 des Trägerelements 20 enden. Alternativ wird das Trägerelement 20 vor dem Aufbringen und Einbrennen des Schichtverbundes 30 mit Schlitzen 240 versehen, die durch Stege 242 voneinander getrennt sind, wobei die Schlitze 240 nach dem Aufbringen und Einbrennen des Schichtverbundes 30 durch Entfernen der Stege 242 zu einem durchgehenden Schlitz 244 miteinander verbunden werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Elektrische Heizeinrichtung (10) für eine Heißkanaldüse, mit einem rohrförmig oder hülsenartig ausgebildeten Trägerelement (20) und mit einem auf dem Trägerelement (20) aufgebrachten Schichtverbund (30), wobei der Schichtverbund (30) zumindest folgende Schichten aufweist:
■ wenigstens eine Heizleiterbahnen (43) aufweisende Heizschicht (40), wobei die Heizschicht (40) eine eingebrannte Folie oder eine eingebrannte Dickschichtpaste ist,
■ eine zwischen dem Trägerelement (20) und der Heizschicht (40) angeordnete Isolierschicht (50),
■ eine über der Isolierschicht (50) und/oder der Heizschicht (40) aufgebrachte Abdeckschicht (60),
■ wobei die Isolierschicht (50) und die Abdeckschicht (60) glasartige und/oder keramische Dielektrikumschichten sind und wobei zumindest die Isolierschicht (50) und/oder die Abdeckschicht (60) nach zumindest einem Einbrennprozess gegenüber dem Trägerelement (20) unter Druckvorspannung steht;
**dadurch gekennzeichnet, dass** das Trägerelement (20) zumindest abschnittsweise mit einem Schlitz (24) und/oder einer Nut (26) versehen ist, wobei der Schlitz (24) und die Nut (26) vor den stirnseitigen Enden (21, 22) des Trägerelements (20) enden.

2. Elektrische Heizeinrichtung nach Anspruch 1, **dadurch gekennzeichnet, dass** der Schlitz (24) und/oder die Nut (26) parallel zur Längsachse (L) des Trägerelements (20) verlaufen.

3. Elektrische Heizeinrichtung nach Anspruch 1 oder 2, **dadurch gekennzeichnet, dass** der Schlitz (24) und/oder die Nut (26) quer zur Längsachse (L) des Trägerelements (20) zumindest abschnittsweise unterschiedliche Breiten aufweist.

4. Elektrische Heizeinrichtung nach Anspruch 3, **dadurch gekennzeichnet, dass** der Schlitz (24) quer zur Längsachse (L) des Trägerelements (20) zumindest abschnittsweise breiter ausgebildet ist als die Nut (26).

5. Elektrische Heizeinrichtung nach einem der Ansprüche 1 bis 4, **dadurch gekennzeichnet, dass** die Nut (26) radial nach außen hin offen ausgebildet ist.

6. Verfahren zur Herstellung einer elektrischen Heizeinrichtung (10) für eine Heißkanaldüse, nach einem der Ansprüche 1 bis 5, **dadurch gekennzeichnet, dass** das Trägerelement (20) nach dem Aufbringen und Einbrennen der Heizschicht (30), der Isolierschicht (40) und der Abdeckschicht (50) zumindest abschnittsweise mit einem Schlitz (24) und/oder einer Nut (26) versehen wird, wobei der Schlitz (24) und die Nut (26) vor den stirnseitigen Enden (21, 22) des Trägerelements (20) enden.

7. Verfahren zur Herstellung einer elektrischen Heizeinrichtung (10) für eine Heißkanaldüse, nach einem der Ansprüche 1 bis 5, **dadurch gekennzeichnet, dass** das Trägerelement (20) vor dem Aufbringen und Einbrennen der Heizschicht (30), der Isolierschicht (40) und der Abdeckschicht (50) mit Schlitzen (240) versehen wird, die durch Stege (242) voneinander getrennt sind und das die Schlitze (240) nach dem Aufbringen und Einbrennen der Heizschicht (30), der Isolierschicht (40) und der Abdeckschicht (50) durch Entfernen der Stege (242) zu einem durchgehenden Schlitz (244) miteinander verbunden werden.

8. Verfahren nach Anspruch 6 oder 7, **dadurch gekennzeichnet, dass** der Schlitz (244) vor den stirnseitigen Enden (21, 22) des Trägerelements (20) endet.

9. Verfahren nach einem der Ansprüche 6 bis 8, **dadurch gekennzeichnet, dass** die Schlitze (240) und die Stege (242) fluchtend auf einer Linie liegen.

10. Verfahren nach Anspruch 9, **dadurch gekennzeichnet, dass** die Linie parallel zur Längsachse (L) des Trägerelements (20) verläuft.

11. Verfahren zur Herstellung einer elektrischen Heizeinrichtung (10) für eine Heißkanaldüse, nach einem der Ansprüche 1 bis 5, **dadurch gekennzeichnet, dass** das Trägerelement (20) vor dem Aufbringen und Einbrennen der Heizschicht (30), der Isolierschicht (40) und der Abdeckschicht (50) mit einer Nut (26) und einem Schlitz (24) versehen wird, wobei der Schlitz (24) und die Nut (26) vor den stirnseitigen Enden (21, 22) des Trägerelements (20) enden, und wobei nach dem Aufbringen und Einbrennen der Heizschicht (30), der Isolierschicht (40) und der Abdeckschicht (50) keine mechanischen Arbeiten mehr an der elektrischen Heizeinrichtung (10) durchgeführt werden.
